# EUROPÄISCHE PATENTSCHRIFT

(11) **EP 1 211 450 B1**
(45) Veröffentlichungstag und Bekanntmachung des Hinweises auf die Patenterteilung: **11.02.2004**
(21) Anmeldenummer: 00125471.3
(22) Anmeldetag: 21.11.2000
(51) Int. Cl.: F16L 5/08, F16B 31/02

(54) **Dichtungsvorrichtung für Kabel- und Rohrdurchgänge**
A sealing arrangement relating to cable and pipe transits
Dispositif d'étanchéité pour le passage de câbles et tuyaux

(43) Veröffentlichungstag der Anmeldung: 05.06.2002
(73) Patentinhaber: Hauff-Technik GmbH & Co. KG, 89542 Herbrechtingen (DE)
(72) Erfinder: Kurz, Ralf, 89537 Giengen (DE); Heck, Martin, 89447 Zöschingen (DE)
(74) Vertreter: Weitzel, Wolfgang, Dr.-Ing. Patentanwalt

(56) Entgegenhaltungen:
- EP-A- 0 899 493
- DE-C- 19 651 659
- GB-A- 2 106 256
- US-A- 5 188 494

## Beschreibung

Die Erfindung betrifft eine Preßeinheit gemäß dem Oberbegriff des Anspruches 1.

Ein Beispiel einer solchen Preßeinheit ist eine Dichtpackung zum Hindurchführen von Leitungen wie Kabeln, Medienleitungen usw. durch die Öffnung einer Wand. Dabei werden unter dem Ausdruck "Leitungen" sowohl elektrische oder Kommunikationsleitungen verstanden als auch Leitungen für fließfähige Stoffe wie Gas oder Wasser. Nur beispielshalber wird auf DE 197 15 885 A1 verwiesen.

Eine solche Dichtpackung weist als wesentliches Element ein gummielastisches Dichtelement auf, dessen Außenkontur wenigstens annähernd der Kontur der Öffnung in der Wand entspricht. Durch das Dichtelement sind Spannschrauben hindurchgeführt. Hiermit läßt sich das Dichtelement stauchen, so dass es in der Öffnung der Wand verspannt wird. Die Dichtpackung umfasst ferner eine Abdeckplatte, die an der einen Stirnfläche des gummielastischen Dichtelementes anliegt. An dieser Abdeckplatte greifen die Spannschrauben an. Die Abdeckplatte liegt mit ihrem Außenumfang an der einen Außenfläche der Wand an. Sie weist Durchbrüche zum Hindurchführen der genannten Leitungen auf. Auch an der anderen Stirnseite des gummielastischen Dichtelementes liegt - als Gegenstück zu der Abdeckplatte - ein Stahlring an, an der die anderen Enden der Spannschrauben angreifen.

Um ein gleichmäßiges Abdichten zu gewährleisten, hat die Spannung in einem bestimmten Bereich zu bleiben. Üblicherweise wird dies durch Verwendung eines Drehmomentschlüssels erreicht.

Diese Dichtpackungen werden häufig in der Baubranche eingesetzt, wo die Werkzeuge stark beansprucht werden. So ist häufig mit einem Defekt der Drehmomentschlüssel zu rechnen, oder zum Teil sind solche Drehmomentschlüssel auf den Baustellen gar nicht verfügbar. Dann ergibt sich das Problem des gleichmäßigen Anspannens dieser Dichtpackungen.

Ein anderes Einsatzbeispiel einer Preßeinheit gemäß dem Oberbegriff des Anspruches 1 zeigt sich im Stahlbau. Hier werden Stahlträger miteinander verschraubt, wobei die Spannkraft in einem bestimmten Bereich bleiben soll. Üblicherweise verwendet der Monteur auch hier einen Drehmomentschlüssel.

Ein weiteres Einsatzgebiet einer Preßeinheit ergibt sich bei Wirkung einer äußeren Druckkraft, insbesondere einer Gewichtskraft auf die Preßeinheit. Beispielsweise soll eine Last auf einem schwimmend verlegten Untergrund so ausgerichtet werden, daß der Untergrund auf der gesamten Fläche gleichmäßig beansprucht, das heißt gepreßt wird. Hier ergibt sich das Problem, festzustellen, ob eine solche gleichmäßige Belastung erreicht ist.

Aufgabe der Erfindung ist es, eine Preßeinheit so auszuführen, daß die oben genannten, verschiedenartigen Probleme gelöst werden. So sollen die Schrauben beispielsweise einer Dichtpackung oder einer Stahlträgerverbindung auch ohne Drehmomentschlüssel mit dem richtigen Anzug verspannt werden können. Bei von außen aufgeprägten Druckkräften soll gewährleistet sein, daß die Preßeinheit gleichmäßig beansprucht ist. Die Ausführung der Preßeinheit soll dabei kostengünstig sein, leicht zu handhaben und unempfindlich, um auch den Einsatz bei starker Beanspruchung zu gewährleisten.

Diese Aufgabe wird durch die unabhängigen Ansprüche der Erfindung gelöst.

Erfindungsgemäß umfaßt die Preßeinheit eine verformbare Masse und einen Preßkörper aus hartem Material zum anpressen an die verformbare Masse. Der Preßkörper weist dabei Bohrungen oder auch anders gestaltete Durchgänge auf. Die verformbare Masse ist im Bereich der Durchgänge an mindestens einer Stelle eingeschnitten. Die Schnittflächen sind dabei vorteilhaft anders eingefärbt als die Oberfläche der verformbaren Masse. Wird die Preßeinheit nun beansprucht, das heißt gepreßt, so drückt sich die Masse nach außen in oder durch die Bohrungen beziehungsweise Durchgänge. Nachdem sie den engsten Querschnitt des Durchganges durchtreten hat, wird sie über den Rand nach außen quellen, der oder die Schnitte werden dabei aufklaffen. Je fester die Preßkraft ist, desto weiter wird die verformbare Masse in die Bohrungen hinein beziehungsweise nach Durchtreten des engsten Querschnittes darüber hinaus quellen, und die Schnitte werden entsprechend weit aufklaffen. Durch die vorteilhafte besondere Einfärbung der Schnittflächen wird die Klaffung der Schnitte deutlich sichtbar. Ein Kreuzschnitt zeigt sich dabei besonders prägnant.

Da die Einschnitte erst aufklaffen können, wenn der engste Querschnitt des Durchganges im Preßkörper von der Masse durchquollen ist, sieht eine besondere vorteilhafte Ausführung der Erfindung Ausbuchtungen der verformbaren Masse im Bereich der Durchgänge vor. Diese Ausbuchtungen ragen dann auch schon im nicht gepreßten Zustand in die Durchgänge hinein, der Weg der quellenden Masse bis zum Aufklaffen der Schnitte ist verkürzt. Vorteilhaft ist dies immer, wenn der Preßkörper Durchgänge mit kleinem Querschnitt im Verhältnis zu seiner Dicke aufweist.

Der Einsatz einer solchen erfindungsgemäßen Preßeinheit gestaltet sich vielfältig. So ist der Einsatz bei jeglicher Spannvorrichtung möglich, durch die Indikation der Spannkraft durch das Herausquellen der verformbaren Masse wird die Verwendung eines Drehmomentschlüssels überflüssig gemacht. Auch die Größe von von außen aufgeprägten Druckkräften, insbesondere Gewichtskräften, wird sichtbar gemacht, so daß eine Last auf zum Beispiel einem schwimmend verlegten Untergrund leicht ausgerichtet werden kann.

In einer besonderen Ausführung der Erfindung ist die verformbare Masse als Beschichtung des zu pressenden oder zu verspannenden Körpers ausgeführt. In einer anderen Ausführung besteht der zu pressende Körper gänzlich aus der verformbaren Masse, hier sei als Beispiel die oben beschriebene Dichtpackung genannt, deren gummielastisches Dichtelement im Bereich einiger Bohrungen der Abdeckplatten, durch die keine Schraube geführt ist, eingeschnitten ist. In einer weiteren Ausführung der Erfindung kann die verformbare Masse in Form eines eigenen Körpers mit dem oder den zu pressenden Körpern verspannt oder verpreßt werden.

Die Erfindung soll nachfolgend anhand einiger Ausführungsbeispiele und den beigefügten Zeichnungen näher erläutert werden. Es zeigen:
- Figur 1: eine Preßeinheit in Form einer Dichtpackung.
- Figur 2: einen Ausschnitt der Dichtpackung im Bereich einer Bohrung in der Deckplatte.
- Figur 3: das Aufklaffen des Einschnittes.
- Figur 4: eine Preßeinheit in Form einer Stahlträgerverspannung.
- Figur 5: eine Preßeinheit in Form eines gewichtskraftbelasteten Untergrundes.
- Figuren 6 und 7: zeigen eine Preßeinheit mit zwei Preßplatten, deren eine eine Aussparung aufweist.
- Figuren 8 und 9: zeigen eine Ausführungsform analog jener gemäß der Figuren 6 und 7, jedoch mit einem Anzeigekörper.
- Figuren10 und 11: zeigen eine Ausführungsform analog jener gemäß der Figuren 8 und 9 mit einem besonders gestalteten Anzeigekörper.

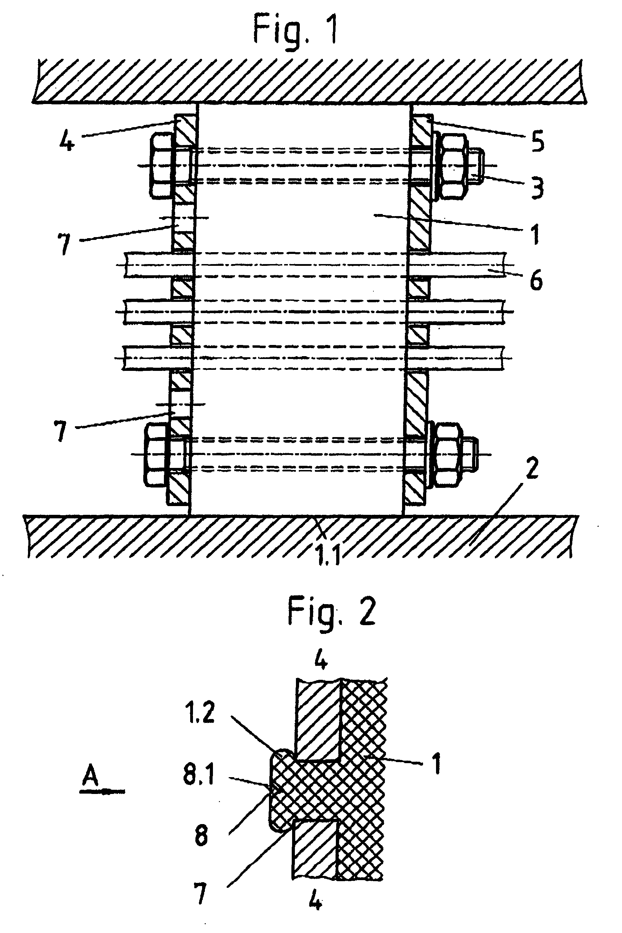

Figur 1 zeigt eine in einem Wanddurchgang eingebaute Dichtpackung. Die Dichtpackung weist ein gummielastisches Dichtelement 1 auf, dessen Außenkontur 1.1 im gespannten Zustand gegen die Wand 2 gedrückt wird. Durch Anziehen der Spannschrauben 3 wird das gummielastische Dichtelement 1 gestaucht und damit nach außen gedrückt. Dabei greifen die Spannschrauben 3 auf der einen Seite an einer Abdeckplatte 4 und auf der anderen Seite des gummielastischen Elementes 1 an einem Gegenstück, zum Beispiel einem Stahlring 5, an. Das gummielastische Element 1 liegt sozusagen sandwichartig zwischen der Deckplatte 4 und der Stahlplatte 5.

Beide Platten 4, 5 und das gummielastische Element 1 weisen Bohrungen auf, durch die die Leitungen 6 geführt sind. Durch das Stauchen des gummielastischen Elementes 1 werden auch diese Leitungen 6 fest umschlossen. Dabei kann die Durchführung auch andersartig als hier gezeigt gestaltet sein, zum Beispiel mit zusätzlichen Hülsen beziehungsweise Stopfen um die Leitungen.

Erfindungsgemäß weist die Deckplatte 4 zusätzliche Bohrungen 7 auf. Durch diese Bohrungen 7 kann im gestauchten Zustand Material des gummielastischen Elementes 1 nach außen quellen. Figur 2 zeigt einen Ausschnitt aus Figur 1 in diesem Bereich. Durch die Pressung wird Material 1.2 des gummielastichen Dichtelementes 1 in die Bohrung 7 gedrückt und quillt heraus. Da erfindungsgemäß im Bereich der Bohrung ein Schnitt 8 in das gummielastische Dichtelement 1 eingebracht ist, klafft dieser Schnitt 8 auf. Durch erfindungsgemäße Einfärbung der Schnittflächen 8.1 kann dieses Aufklaffen deutlich sichtbar gemacht werden.

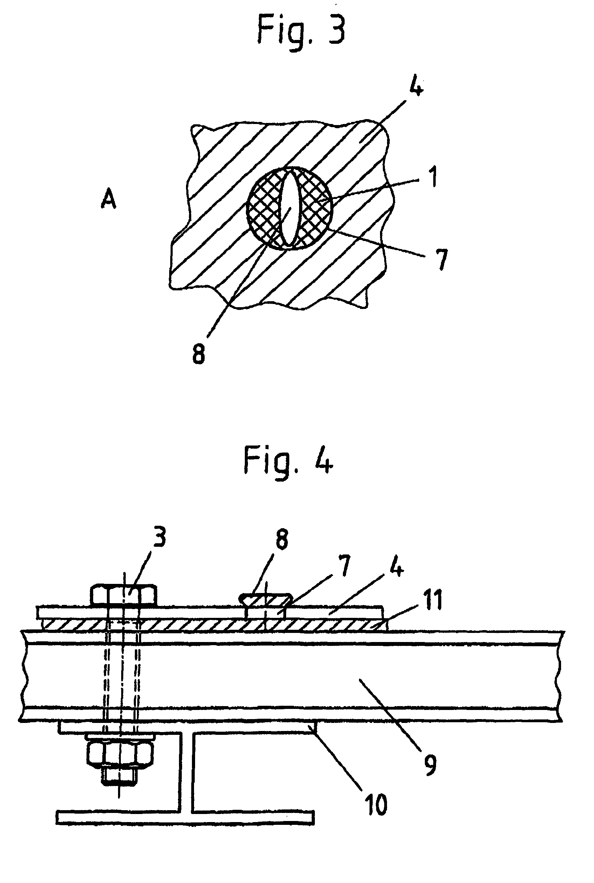

Figur 3 zeigt eine Draufsicht auf die Bohrung 7. Man kann hier deutlich das Auseinanderklaffen des Schlitzes 8 erkennen.

Figur 4 zeigt zwei mittels einer Spannschraube 3 verspannte Stahlträger 9 und 10. Im Sinne der Erfindung ist mit den Stahlträgern 9, 10 eine verformbare Masse 11 und eine Deckplatte 4 verspannt. Durch die Bohrung 7 quillt die Masse 11 heraus, und der Spalt 8 klafft auseinander.

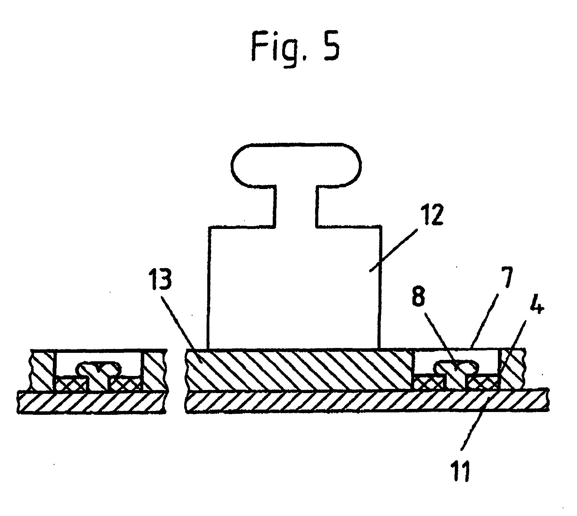

Figur 5 zeigt eine Last 12, die auf einem Untergrund 13 ruht. Der Untergrund 13 ist auf einer gummielastischen Matte 11 verlegt. Da der Untergrund 13 eine große Dicke hat, ist in die Bohrung 7 eine zusätzliche Deckplatte 4 - am unteren Rand fest verbunden mit dem Untergrund 13 - eingebracht. Die verformbare Masse 11 quillt aufgrund der Gewichtskraft der Masse 12 über den Rand der Deckplatte 4 hinaus, der Spalt 8 klafft auseinander. Da im Untergrund 13 weitere Bohrungen mit eingelassenen Deckplatten vorgesehen sind, durch die die verformbare Masse 11 quillt, kann die Masse 12 anhand des Aufklaffens der Kerben 8 so ausgerichtet werden, daß der Untergrund 13 gleichmäßig angepreßt wird.

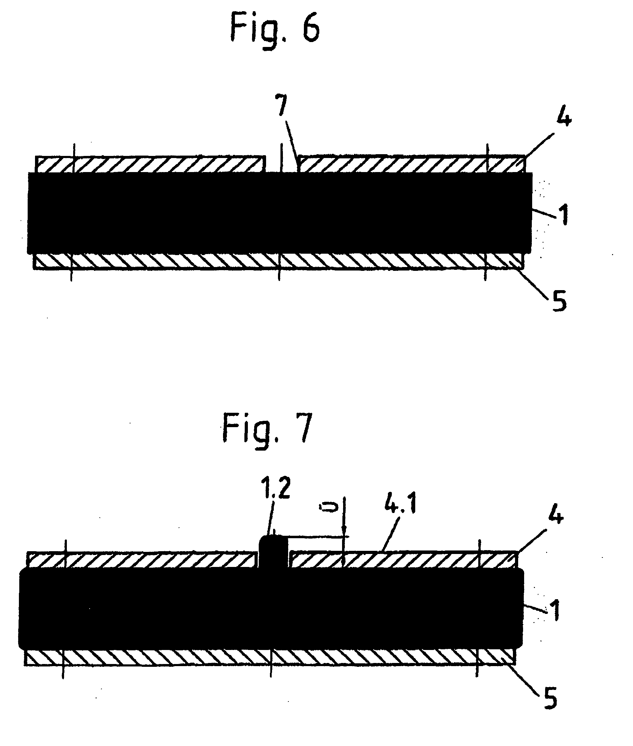

Die Ausführungsform gemäß der Figuren 6 und 7 ist besonders einfach. Man erkennt hierbei wiederum ein gummielastisches Dichtelement 1, das im wesentlichen plattenförmig ist. Dieses befindet sich sandwichartig zwischen zwei Preßplatten 4, 5. Dabei weist die Preßplatte 4 eine Aussparung 7 auf.

Figur 6 zeigt dabei den Zustand, bei welchem auf das gummielastische Dichtelement 1 keine Preßkraft ausgeübt wird.

Figur 7 zeigt hingegen den Zustand des Pressens. Dabei wird eine Preßkraft auf das gummielastische Dichtelement 1 aufgebracht. Hierdurch tritt Material aus der verformbaren Masse des Dichtlementes 1 durch die Durchgangsöffnung hindurch. Die ausgetretene Masse ist dabei stiftförmig. Ist die Durchgangsöffnung 7 eine Kreisbohrung, so ist der Stift zylindrisch.

Wie man weiterhin erkennt, befindet sich die Oberkante 1.2 des aus der verformbaren Masse gebildeten Stiftes um ein bestimmtes Maß Ü über der Oberkante 4.1 der Preßplatte 4. Dieser Überstand Ü ist ein Maß für die Preßkraft.

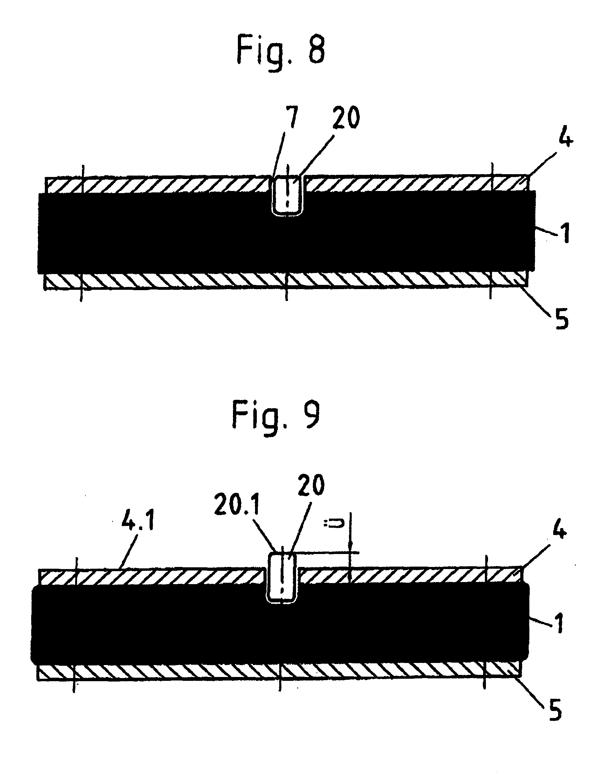

Die Ausführungsform gemäß der Figuren 8 und 9 unterscheidet sich von jener gemäß der Figuren 6 und 7 in folgendem:

Die verformbare Masse des Dichtelementes 1 weist im Bereich der Durchgangsöffnung 7 der Preßplatte 4 eine Aussparung auf. Die Aussparung ist gegen die Durchgangsöffnung 7 hin offen. Es handelt sich somit um eine Sackbohrung. Diese Sackbohrung dient zur Aufnahme eines zylindrischen Stiftes 20. Der Stift 20 ist derart dimensioniert, daß er der Durchgangsöffnung 7, also auch der Sackbohrung, entspricht Sackbohrung und Durchgangsöffnung 7 fluchten miteinander.

Auch hier stellt wiederum der Abstand zwischen der Oberkante 20.1 des Stiftes 20 und der Oberkante 4.1 der Preßplatte 4 ein Maß Ü für die Größe der Preßkraft dar.

Der Überstand Ü des Stiftes 20 zeigt somit an, ob die Preßeinheit ausreichend verpreßt ist. Die Anzeige kann beispielsweise in Millimetern oder gegebenenfalls in einer noch feineren Einheit erfolgen. Auch könnte die Position der Oberkante 20.1 als Bezugsgröße herangezogen und beispielsweise durch einen Lichtstrahl mit größter Genauigkeit erfaßt werden.

Der Stift kann von besonderer Farbe sein, so daß er sich optisch gegen die Preßplatte 4 abhebt.

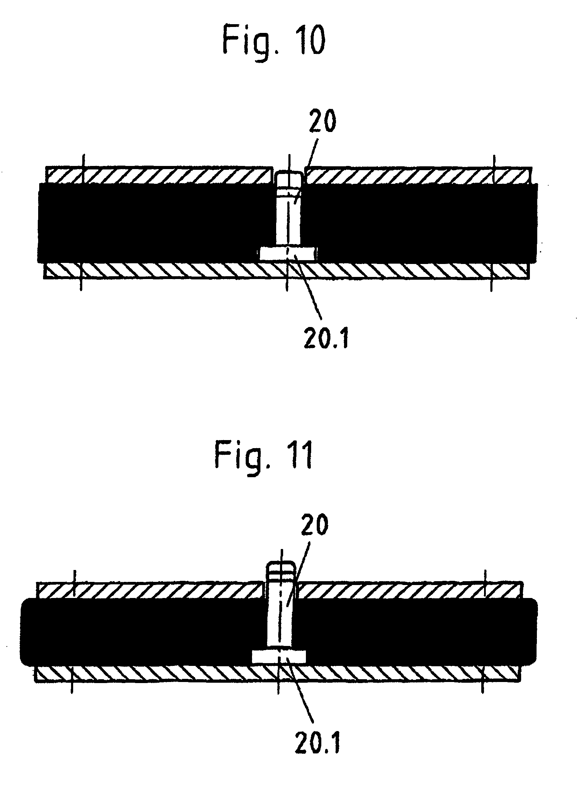

Bei der Ausführungsform gemäß der Figuren 10 und 11 ist der Anzeigekörper als Stift 20 mit einem Kopf 20.1 versehen. Hierdurch wird ein Herausfallen des Stiftes 20 verhindert.

## Patentansprüche

1. Preßeinheit;
mit einer verformbaren Masse (1);
mit einem Preßkörper (4) aus hartem Material zum Anpressen an die verformbare Masse (1);
**dadurch gekennzeichnet, daß** der Preßkörper (4) wenigstens eine Durchgangsöffnung (7) aufweist;
die Oberfläche der verformbaren Masse (1) wenigstens im Bereich einer Durchgangsöffnung (7) wenigstens einmal eingeschnitten ist;
der Preßkörper (4) so an der verformbaren Masse (1) anliegt, daß beim Anpressen Material der verformbaren Masse (1) durch die Durchgangsöffnung (7) des Preßkörpers (4) nach außen quillt.

2. Preßeinheit gemäß Anspruch 1, **dadurch gekennzeichnet, daß** die Schnittflächen in der verformbaren Masse (1) eine andere Farbe aufweisen als die Oberfläche der verformbaren Masse.

3. Preßeinheit gemäß einem der Ansprüche 1 bis 2, **dadurch gekennzeichnet, daß** die Oberfläche der verformbaren Masse wenigstens im Bereich einer Durchgangsöffnung (7) mit wenigstens einem Kreuzschnitt versehen ist.

4. Preßeinheit gemäß einem der Ansprüche 1 bis 3, **dadurch gekennzeichnet, daß** die Durchgangsöffnung (7) im Preßkörper (4) als Bohrung ausgeführt ist.

5. Preßeinheit gemäß einem der Ansprüche 1 bis 4, **dadurch gekennzeichnet, daß** die verformbare Masse (1) im Bereich mindestens einer Durchgangsöffnung im nicht gepreßten Zustand eine Ausbuchtung aufweist.

6. Preßeinheit gemäß einem der Ansprüche 1 bis 5, **dadurch gekennzeichnet, daß** die Preßeinheit eine Spannvorrichtung umfaßt.

7. Preßeinheit gemäß einem der Ansprüche 1 bis 5, **dadurch gekennzeichnet, daß** die die Preßeinheit verpressende Kraft eine von außen aufgebrachte Druckkraft, insbesonders eine Gewichtskraft ist.

8. Preßeinheit gemäß einem der Ansprüche 1 bis 7, **dadurch gekennzeichnet, daß** die verformbare Masse (1) in Form einer Beschichtung ausgeführt ist.

9. Preßeinheit gemäß einem der Ansprüche 1 bis 7, **dadurch gekennzeichnet, daß** die verformbare Masse (1) als eigener Körper ausgeführt ist.

10. Preßeinheit gemäß einem der Ansprüche 1 bis 7, **dadurch gekennzeichnet, daß** die verformbare Masse (1) als Teil eines anderen Körpers der Preßeinheit ausgeführt ist.

11. Preßeinheit
mit einer verformbaren Masse 1;
mit einem Preßkörper (4) aus hartem Material zum Anpressen an die verformbare Masse (1),
**dadurch gekennzeichnet daß** der Preßkörper (4) wenigstens eine Durchgangsöffnung (7) aufweist, durch welche bei Aufbringen einer Preßkraft auf die verformbare Masse (1) Material aus dieser hindurchtritt;
und mit einer Einrichtung zum Erfassen des Überstandes (Ü) des hindurchgetretenen Materials über die Oberkante (4.1) des Preßkörpers (4) versehen ist.

12. Preßeinheit nach Anspruch 11, **dadurch gekennzeichnet, daß**
die verformbare Masse im Bereich der Durchgangsöffnung (7) eine gegen die Durchgangsöffnung (7) hin offene Aussparung aufweist und in die Aussparung ein Anzeigekörper (20) eingesetzt ist.

13. Preßeinheit nach Anspruch 12, **dadurch gekennzeichnet, daß** die Aussparung in der verformbaren Masse (1) die Durchgangsöffnung (7) und der Anzeigekörper (20) kreisförmigen Querschnitt haben und miteinander fluchten.

## Claims

1. A pressing unit with a deformable mass (1), with a pressing body (4) made of a solid material for pressing against the deformable mass (1), **characterized in that** the pressing body (4) comprises at least one lead-through opening (7), the surface of the deformable mass (1) is incised at least once in the region of a lead-through opening (7), the pressing body (4) rests on the deformable mass (1) in such a way that during the pressing, material of the deformable mass (1) wells outwardly through the lead-through opening (7) of the pressing body (4).

2. A pressing unit as claimed in claim 1, **characterized in that** the cutting surfaces in the deformable mass (1) have a different color than the surface of the deformable mass.

3. A pressing unit as claimed in one of the claims 1 to 2, **characterized in that** the surface of the deformable mass is provided at least in the region of the lead-through opening (7) with at least one cross cut.

4. A pressing unit as claimed in one of the claims 1 to 3, **characterized in that** the lead-through opening (7) is arranged in the pressing body (4) as a bore.

5. A pressing unit as claimed in one of the claims 1 to 4, **characterized in that** the deformable mass (1) comprises a dent in the region of at least one lead-through opening in the non-pressed state.

6. A pressing unit as claimed in one of the claims 1 to 5, **characterized in that** the pressing unit comprises a clamping unit.

7. A pressing unit as claimed in one of the claims 1 to 5, **characterized in that** the force pressing the pressing unit is a force of pressure exerted from the outside, especially a force by weight.

8. A pressing unit as claimed in one of the claims 1 to 7; **characterized in that** the deformable mass (1) is provided in the form of a coating.

9. A pressing unit as claimed in one of the claims 1 to 7, **characterized in that** the deformable mass (1) is arranged as a separate body.

10. A pressing unit as claimed in one of the claims 1 to 7, **characterized in that** the deformable mass is arranged as a part of another body of the pressing unit.

11. A pressing unit with a deformable mass (1), with a pressing body (4) made of a solid material for pressing against the deformable mass (1), **characterized in that** the pressing body (4) comprises at least one lead-through opening (7) through which the material passes when a force of pressure is applied to the deformable mass (1), and is provided with a device for detecting the excess length (Ü) of the material that has passed through beyond the upper edge (4.1) of the pressing body (4).

12. A pressing unit as claimed in claim 11, **characterized in that** the deformable mass comprises an open recess facing the lead-through opening (7) in the region of the lead-through opening (7) and an indicator body (20) is inserted in said recess.

13. A pressing unit as claimed in claim 12, **characterized in that** the recess in the deformable mass (1), the lead-through opening (7) and the indicator body (20) have a circular cross section and are in alignment with each other.

## Revendications

1. Unité de presse,
avec une masse déformable (1),
avec un élément de compression (4) en métal dur qui peut être pressé sur la masse déformable (1),
**caractérisée en ce que** l'élément de compression (4) présente au moins une ouverture traversante (7),
la surface de la masse déformable (1) est incisée au moins une fois au niveau d'une ouverture traversante (7),
l'élément de compression (4) repose sur la masse déformable (1) de telle sorte que lors du pressage, le matériau de la masse déformable (1) se dilate vers l'extérieur à travers l'ouverture traversante (7) de l'élément de compression (4).

2. Unité de presse selon la revendication 1, **caractérisée en ce que** les surfaces d'incision dans la masse déformable (1) ont une couleur différente de la surface de la masse déformable.

3. Unité de presse selon l'une quelconque des revendications 1 à 2, **caractérisée en ce que** la surface de la masse déformable est pourvue au moins au niveau d'une ouverture traversante (7) d'au moins une incision en croix.

4. Unité de presse selon l'une quelconque des revendications 1 à 3, **caractérisée en ce que** l'ouverture traversante (7) de l'élément de compression (4) est conçue comme un alésage.

5. Unité de presse selon l'une quelconque des revendications 1 à 4, **caractérisée en ce que** la masse déformable (1) présente, dans l'état non compressé, un renfoncement au niveau d'au moins une ouverture traversante.

6. Unité de presse selon l'une quelconque des revendications 1 à 5, **caractérisée en ce que** l'unité de presse comprend une un mécanisme de serrage.

7. Unité de presse selon l'une quelconque des revendications 1 à 5, **caractérisée en ce que** la force compressant l'unité de presse est une force de compression appliquée de l'extérieur, en particulier un poids.

8. Unité de presse selon l'une quelconque des revendications 1 à 7, **caractérisée en ce que** la masse déformable (1) est réalisée sous la forme d'un revêtement.

9. Unité de presse selon l'une quelconque des revendications 1 à 7, **caractérisée en ce que** la masse déformable (1) est réalisée comme un élément en soi.

10. Unité de presse selon l'une quelconque des revendications 1 à 7, **caractérisée en ce que** la masse déformable (1) est réalisée comme une partie d'un autre élément de l'unité de presse.

11. Unité de presse
avec une masse déformable (1),
avec un élément de compression (4) en métal dur destiné à être pressé sur la masse déformable (1),
**caractérisée en ce que** l'élément de compression (4) présente au moins une ouverture traversante (7), à travers laquelle du matériau de la masse déformable (1) lors de l'application d'une force de pressage sur celle-ci, et **en ce qu'**il est pourvu d'un dispositif pour capter le trop-plein (Ü) du matériau qui traverse par-dessus le bord supérieur (4.1) de l'élément de compression (4).

12. Unité de pressage selon la revendication 11, **caractérisée en ce que** la masse déformable présente au niveau de l'ouverture traversante (7) un évidement ouvert en direction de l'ouverture traversante (7) et **en ce qu'**un élément indicateur (20) est introduit dans l'évidement.

13. Unité de presse selon la revendication 12, **caractérisée en ce que** l'évidement dans la masse déformable (1 ), l'ouverture traversante (7) et l'élément indicateur (20) ont une section circulaire et sont alignés les uns sur les autres.
